# EUROPÄISCHE PATENTSCHRIFT

(11) **EP 3 109 078 B1**
(45) Veröffentlichungstag und Bekanntmachung des Hinweises auf die Patenterteilung: **25.09.2019**
(21) Anmeldenummer: 16174604.5
(22) Anmeldetag: 15.06.2016
(51) Int. Cl.: B60H 1/00

(54) **HAUBE EINER AUFDACHKLIMAANLAGE FÜR EIN STRASSENFAHRZEUG**
HOOD OF A ROOF-TOP AIR-CONDITIONING SYSTEM FOR A ROAD VEHICLE
COUVERCLE D'UN CLIMATISEUR SUR TOIT POUR UN VEHICULE ROUTIER

(30) Priorität: 23.06.2015 DE 102015211602
(43) Veröffentlichungstag der Anmeldung: 28.12.2016
(73) Patentinhaber: Mahle International GmbH, 70376 Stuttgart (DE)
(72) Erfinder: HIPP-KALTHOFF, Christoph, 70192 Stuttgart (DE); KNORR, Hans-Henning, 73630 Remshalden (DE); VOIGT, Klaus, 74321 Bietigheim-Bissingen (DE)
(74) Vertreter: BRP Renaud & Partner mbB Rechtsanwälte Patentanwälte Steuerberater

(56) Entgegenhaltungen:
- WO-A1-2013/158087
- DE-A1-102006 047 369
- DE-U1-202013 104 937

## Beschreibung

Die vorliegende Erfindung betrifft eine Haube für eine Aufdachklimaanlage, die für ein Straßenfahrzeug vorgesehen ist. Des Weiteren betrifft die Erfindung eine Aufdachklimaanlage für ein Straßenfahrzeug, die mit einer derartigen Haube ausgestattet ist.

Klimaanlagen zum Klimatisieren eines Fahrzeuginnenraums sind allgemein bekannt. Eine solche Klimaanlage arbeitet mit wenigstens einem Kältekreis, in dem ein Kältemittel zirkuliert und in dem zumindest ein Verdampfer zum Verdampfen des Kältemittels, mindestens ein Kondensator zum Kondensieren des Kältemittels sowie wenigstens eine Fördereinrichtung zum Antreiben des Kältemittels im Kältemittelkreis angeordnet sind. Mit Hilfe des Verdampfers, der als Wärmeübertrager ausgestaltet ist, kann ein Luftstrom gekühlt werden, der dem zu klimatisierenden Fahrzeuginnenraum zugeführt werden soll. Die hierbei dem Luftstrom entzogene Wärme kann über den Kondensator zum Beispiel einer Umgebung des Fahrzeugs zugeführt werden. Zweckmäßig ist hierzu auch der Kondensator als Wärmeübertrager ausgestaltet, der beispielsweise von einem Kühlluftstrom durchströmt wird, der die Wärme mitnimmt.

Während bei Personenkraftwagen die Klimaanlagen üblicherweise in das Fahrzeug integriert sind, ist bei Großraumfahrzeugen, wie zum Beispiel bei Nutzfahrzeugen, Omnibussen und dergleichen, auch eine externe Anbringung, nämlich bevorzugt auf einem Fahrzeugdach möglich. Dieser auf dem Fahrzeugdach montierte Teil der Klimaanlage wird als Aufdachklimaanlage bezeichnet.

Eine derartige Aufdachklimaanlage umfasst zumindest eine Verdampfereinheit, die in einem Gehäuse wenigstens einen Verdampfer aufweist. Das Gehäuse weist dabei üblicherweise ein Gehäuseunterteil sowie ein Gehäuseoberteil auf. Im Gehäuse können außerdem zumindest ein Luftfilter und wenigstens ein Verdampfergebläse angeordnet sein. Der jeweilige Verdampfer dieser Verdampfereinheit ist wie vorstehend erläutert in einen Kältekreis eingebunden. Der zugehörige Kondensator kann grundsätzlich an jeder beliebigen anderen, geeigneten Stelle des Fahrzeugs angeordnet sein. Beispielsweise in einem Motorraum des Fahrzeugs bzw. in einem Raum des Fahrzeugs, in dem auch ein Hauptkühler eines Motorkühlkreises angeordnet ist. Insbesondere kann die Aufdachklimaanlage über den Kältekreis somit an einen ohnehin bereits am Fahrzeug vorhandenen Kondensator angeschlossen sein. Sofern die Aufdachklimaanlage mit einem eigenen Kondensator ausgestattet ist, umfasst sie außerdem eine Kondensatoreinheit, die zumindest einen Kondensator aufweist. Ferner kann ein Kondensatorgebläse vorgesehen sein. Zweckmäßig kann auch eine Lüfterzarge vorgesehen sein, die einen Strömungskanal definiert, der den Kondensator mit dem Kondensatorgebläse verbindet.

Ferner kann eine derartige Aufdachklimaanlage mit einer Haube ausgestattet sein, die zum Abdecken der Verdampfereinheit sowie gegebenenfalls zum Abdecken der Kondensatoreinheit dient.

Derartige Aufdachklimaanlagen besitzen eine vergleichsweise komplexe Struktur, so dass der Aufwand zum Herstellen sowie zum Montieren einer derartigen Aufdachklimaanlage am Fahrzeug vergleichsweise groß ist.

Dokument DE 10 2006 047 369 A1 zeigt eine Aufdachklimaanlage mit einer Außenhaut aus einem ersten Kunststoff und einer Innenhaut aus einem zweiten Kunststoff.

Eine Aufdachklimaanlage für ein Schienenfahrzeug ist beispielsweise aus der DE 10 2009 056 968 B3 bekannt. Sie besitzt ein kastenförmiges Gehäuse, in dem mehrere Verdampfereinheiten und mehrere Kondensatoreinheiten untergebracht sind, wobei ein Rahmen des Gehäuses Einlassöffnungen für die Verdampfer und Einlassöffnungen für die Kondensatoren aufweist. Ein auf den Rahmen aufgesetzter Deckel verschließt das Gehäuse.

Weitere Aufdachklimaanlagen für Straßenfahrzeuge sind auch aus der DE 10 2006 047 367 B4, DE 10 2012 018 272 A1 und aus der DE 10 2012 216 039 A1 bekannt. Sie zeichnen sich jeweils dadurch aus, dass zwei Verdampfereinheiten beiderseits einer mittig angeordneten Kondensatoreinheit angeordnet sind, so dass die Kondensatoreinheit bezüglich einer Fahrzeugquerrichtung zwischen den beiden Verdampfereinheiten angeordnet ist. Bei der DE 10 2012 216 039 A1 weisen die beiden Verdampfereinheiten jeweils ein Gehäuseunterteil auf, die jeweils an ein dazwischen angeordnetes Gehäuseunterteil der Kondensatoreinheit angebaut sind. Bei der DE 10 2006 047 367 B4 sind die Gehäuse für die Verdampfereinheiten und für die Kondensatoreinheit in der Fahrzeuglängsrichtung modular aufgebaut, so dass zwischen zwei Endmodulen eine variierende Anzahl an Zwischenmodulen angeordnet werden kann. Hierzu sind die Grundkörper der Gehäuse sowie die zugehörigen Klappen zum Verschließen der nach oben offenen Grundkörper in der Fahrzeuglängsrichtung aneinander fixierbar. Aus der DE 10 2012 018 272 A1 ist es bekannt, die Grundkörper der Gehäuse für die Verdampfereinheiten und die Kondensatoreinheit mit Hilfe von Hauben abzudecken, wobei die außen liegenden Hauben der seitlichen Verdampfereinheiten an der mittigen Haube der mittleren Kondensatoreinheit um eine parallel zur Fahrzeuglängsachse verlaufende Schwenkachse schwenkbar gelagert sind.

Die vorliegende Erfindung beschäftigt sich mit dem Problem, für eine Aufdachklimaanlage der vorstehend beschriebenen Art bzw. für eine zugehörige Haube eine verbesserte Ausführungsform anzugeben, die sich insbesondere durch eine preiswerte Herstellbarkeit sowie durch eine einfache Montierbarkeit am Fahrzeug auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, bei einer Aufdachklimaanlage die Haube mit einer Außenhaut und mit einer Innenhaut zu versehen, wobei die Außenhaut sich an einer Außenseite der Haube befindet und aus einem ersten Kunststoff hergestellt ist, bei dem es sich bevorzugt um einen witterungsbeständigen, insbesondere UV-beständigen, Kunststoff handelt. Im Unterschied dazu befindet sich die Innenhaut an einer Innenseite der Haube und besteht aus einem zweiten Kunststoff, der vom ersten Kunststoff der Außenhaut verschieden ist. Mit anderen Worten, die Haube ist als Kunststoffverbundbauteil konzipiert, derart, dass die Haube eine Außenhaut und eine Innenhaut aus verschiedenen Kunststoffen besitzt. Der Kunststoff der Außenhaut ist witterungsbeständig konzipiert, wodurch die mit dieser Haube ausgestattete Aufdachklimaanlage vor den üblichen Witterungseinflüssen geschützt ist. Ein witterungsbeständiger, insbesondere alterungsbeständiger und UV-beständiger Kunststoff ist beispielsweise ABS, wobei ABS für Acrylnitril-Butadien-Styrol steht. Derartige witterungsbeständige Kunststoffe sind vergleichsweise teuer und regelmäßig nicht spritzgussfähig, wodurch eine Serienproduktion von Hauben, die vollständig aus einem derartigen witterungsbeständigen Kunststoff bestehen, vergleichsweise teuer ist. Die Innenhaut besteht zweckmäßig aus einem preiswerteren Kunststoff und kann beispielsweise die erforderliche Stabilität und Steifigkeit für die Haube erzeugen. Die Außenhaut kann eine deutlich geringere Wandstärke besitzen als die Innenhaut, so dass für die Haube nur vergleichsweise wenig teuerer witterungsbeständiger Kunststoff verwendet werden muss. Erfindungsgemäß ist die Innenhaut an die Außenhaut angespritzt. Die hier vorgestellte Kompositbauweise ermöglicht es, für die Innenhaut einen spritzfähigen Kunststoff zu verwenden, so dass letztlich eine vergleichsweise preiswerte Serienproduktion für die Haube möglich wird.

Entsprechend einer vorteilhaften Ausführungsform ist die Außenhaut durch eine Kunststofffolie gebildet, an die die Innenhaut angespritzt ist. Mit anderen Worten, die Haube wird durch Folienhinterspritzen hergestellt, also mittels einer Folienhinterspritztechnik. Beim Folienhinterspritzen wird üblicherweise die Außenhaut in Form einer Kunststofffolie in ein Spritzwerkzeug eingelegt, mit dem die Innenhaut aus Kunststoff spritzgeformt wird. Das heißt, nach dem Einlegen der Kunststofffolie, die in der Haube die Außenhaut bildet, wird im Spritzwerkzeug die Innenhaut an die Innenseite oder Rückseite der Kunststofffolie angespritzt. Diese wird insoweit hinterspritzt. Die Außenhaut kann hinreichend elastisch und flexibel sein, um in das Spritzwerkzeug verwerfungsfrei eingelegt werden zu können. Gegebenenfalls kann die Kunststofffolie einen hierfür geeigneten Zuschnitt besitzen. Ebenso ist grundsätzlich denkbar, die Kunststofffolie zuvor tiefzuziehen, um sie in eine Form zu bringen, die einfacher passgenau in das Spritzwerkzeug eingelegt werden kann. Jedenfalls eignet sich das Folienhinterspritzen für eine Serienproduktion der hier vorgestellten Haube.

Gemäß einer vorteilhaften Ausführungsform kann an der Innenhaut ein Gehäuseoberteil einer Verdampfereinheit der Aufdachklimaanlage integral ausgeformt sein, also damit materialeinheitlich in einem Stück spritzgeformt sein. Dieses in die Haube integrierte Gehäuseoberteil verschließt ein Gehäuseunterteil der Verdampfereinheit, wenn die Haube an der Aufdachklimaanlage montiert ist. Durch die Integration des Gehäuseoberteils in die Haube wird eine preiswerte Serienproduktion der Aufdachklimaanlage vereinfacht. Eine derartige Verdampfereinheit umfasst zumindest einen Verdampfer, der im vorgenannten Gehäuse untergebracht ist. Ferner kann diese Verdampfereinheit auch wenigstens ein Verdampfergebläse und mindestens ein Luftfilter aufweisen, wobei vorzugsweise auch diese Komponenten im Gehäuse angeordnet sein können.

Gemäß einer Weiterbildung kann das Gehäuseoberteil, das integral an der Innenhaut der Haube ausgeformt ist, zumindest eine Montagestelle zum Anbauen wenigstens einer Komponente der Verdampfereinheit vorgesehen sein, die zumindest teilweise integral am Gehäuseoberteil ausgeformt ist. Eine derartige Montagestelle kann beispielsweise eine Aufnahme und/oder eine Halterung und/oder eine Rastverbindung beinhalten. Komponenten der Verdampfereinheit, die mit Hilfe einer derartigen Montagestelle an das Gehäuseoberteil angebaut werden können, sind beispielsweise zumindest ein Verdampfer, zumindest ein Luftfilter und zumindest ein Verdampfergebläse.

Bevorzugt ist daher vorgesehen, dass die jeweilige Montagestelle Befestigungsmittel zum Befestigen der jeweiligen Komponente am Gehäuseoberteil und/oder Positioniermittel zum Positionieren der jeweiligen Komponente am Gehäuseoberteil aufweist. Befestigungsmittel ermöglichen eine mechanisch feste Verbindung der jeweiligen Komponente am Gehäuseoberteil bzw. an der Haube und sind beispielsweise Bestandteile von Schraubverbindungen, Clipverbindungen und Rastverbindungen. Positioniermittel ermöglichen eine Lagefixierung der jeweiligen Komponente am Gehäuseoberteil bzw. an der Haube und sind beispielsweise Anschläge, Rahmenteile, Einstecköffnungen und Einsteckvertiefungen.

Bei einer anderen Ausführungsform kann an der Innenhaut ein Haubenrahmen integral ausgeformt sein, der eine offene Seite der Haube, die im montierten Zustand der Haube einem Fahrzeugdach zugewandt ist, entlang eines Haubenrands seitlich einfasst. Die Integration eines derartigen Haubenrahmens in die angespritzte Innenhaut gibt der Haube eine zusätzliche Aussteifung bzw. Stabilität.

Gemäß einer vorteilhaften Weiterbildung kann der Haubenrahmen das vorstehend genannte Gehäuseoberteil seitlich einfassen. Bei dieser Weiterbildung bildet der Haubenrahmen gleichzeitig eine seitliche Einfassung des vorstehend genannten Gehäuseunterteils. Insoweit führt der Haubenrahmen gleichzeitig zu einer Versteifung des Gehäuseoberteils bzw. zu einer Aussteifung der Haube im Bereich des Gehäuseunterteils.

Bei einer anderen Ausführungsform kann an der Innenhaut eine Lüfterzarge einer Kondensatoreinheit der Aufdachklimaanlage integral ausgeformt sein, die im montierten Zustand der Haube von einem Kondensator der Kondensatoreinheit zu einem Kondensatorgebläse der Kondensatoreinheit führt. Auch diese Maßnahme nutzt konsequent den Vorteil der spritzgeformten Innenhaut zur Integration weiterer wichtiger Komponenten der Aufdachklimaanlage. Die Lüfterzarge definiert einen Strömungskanal, der vom Kondensator zum Kondensatorgebläse führt. Ferner können zweckmäßig an der Lüfterzarge einerseits das Kondensatorgebläse und andererseits der Kondensator befestigt sein. Somit lassen sich alle wesentlichen dachseitigen Komponenten der Kondensatoreinheit an der Haube vormontieren, was die Montage der Aufdachklimaanlage am Fahrzeug erheblich vereinfacht. Alternativ kann auch eine bezüglich der Haube separate Lüfterzarge zum Einsatz kommen.

Bei einer anderen vorteilhaften Ausführungsform kann der zuvor genannte Haubenrahmen die Lüfterzarge seitlich einfassen. Somit bewirkt der Haubenrahmen auch im Bereich der Lüfterzarge eine signifikante Aussteifung der Haube, was die zuvor beschriebene Bereitstellung einer vormontierbaren Einheit vereinfacht.

Bei einer anderen vorteilhaften Weiterbildung kann der Haubenrahmen das separate Gehäuseunterteil und die separate Lüfterzarge seitlich einfassen. Ein besonders hoher Integrationsgrad wird erreicht, wenn der Haubenrahmen das integrierte Gehäuseoberteil und die integrierte Lüfterzarge seitlich einfasst.

Gemäß einer anderen vorteilhaften Ausführungsform kann das in die Haube integrierte Gehäuseoberteil zur Befestigung des Gehäuseunterteils vorbereitet sein, wodurch es im Rahmen einer Vormontage möglich ist, alle wesentlichen, dachseitigen Komponenten der Verdampfereinheit an der Haube bzw. in der Haube zu montieren. Insbesondere kann das Gehäuse der Verdampfereinheit durch Befestigen des Gehäuseunterteils am Gehäuseoberteil verschlossen werden. Hierdurch umfasst die vormontierbare Baugruppe in der Haube die wesentlichen Komponenten der Verdampfereinheit, nämlich deren Gehäuse sowie zumindest einen darin angeordneten Verdampfer.

Ein erfindungsgemäße Aufdachklimaanlage für ein Straßenfahrzeug umfasst eine Haube der vorstehend beschriebenen Art sowie eine Verdampfereinheit, die in einem Gehäuse, das ein Gehäuseunterteil und ein Gehäuseoberteil aufweist, zumindest einen Verdampfer aufweist. Die Haube ist so geformt, dass sie im montierten Zustand der Aufdachklimaanlage die Verdampfereinheit abdeckt. Die Verdampfereinheit kann als weitere Komponenten zumindest ein Verdampfergebläse und/oder wenigstens ein Luftfilter aufweisen. Vorteilhaft sind diese Komponenten im Gehäuse untergebracht, also zwischen Gehäuseunterteil und Gehäuseoberteil angeordnet.

Gemäß einer Ausführungsform kann ein Dachrahmen vorgesehen sein, der im montierten Zustand der Aufdachklimaanlage am Fahrzeugdach befestigt ist, wobei der zuvor genannte Haubenrahmen an diesem Dachrahmen befestigt ist. Bevorzugt ist jedoch eine Ausführungsform, bei welcher der zuvor genannte Haubenrahmen direkt am Fahrzeugdach befestigt werden kann, um die Aufdachklimaanlage am Fahrzeugdach anzubringen. Dies gilt insbesondere für die vorstehend beschriebenen Ausführungsformen, bei denen die Haube mit der Verdampfereinheit eine vormontierbare Baugruppe bildet.

Dementsprechend wird auch hier eine Ausführungsform bevorzugt, bei der das Gehäuseoberteil in die Innenhaut der Haube integriert ist und bei der das Gehäuseunterteil am Gehäuseoberteil befestigbar ist, so dass im montierten Zustand das Gehäuseunterteil nur über die Haube am Fahrzeugdach befestigt ist. Hierdurch lässt sich die Haube mit Verdampfereinheit als vormontierbare Baugruppe realisieren.

Entsprechend einer vorteilhaften Ausführungsform umfasst die Aufdachklimaanlage außerdem eine Kondensatoreinheit, die eine Lüfterzarge, wenigstens ein Kondensatorgebläse und zumindest einen Kondensator aufweist. Die Lüfterzarge kann grundsätzlich bezüglich der Haube ein separates Bauteil bilden und im montierten Zustand der Aufdachklimaanlage auf geeignete Weise am Fahrzeugdach festgelegt sein. Bevorzugt ist jedoch eine Ausführungsform, bei der die Lüfterzarge an der Haube fixiert ist, so dass sie im montierten Zustand nur über die Haube am Fahrzeugdach befestigt ist, also keine separate oder eigene Befestigung am Fahrzeugdach besitzt. Von besonderem Vorteil ist auch hier eine Ausführungsform, bei welcher die Lüfterzarge in die Innenhaut der Haube integriert ist. Auch diesen Maßnahmen unterstützen die Realisierung einer vormontierbaren Baugruppe.

Insbesondere ist eine Ausführungsform denkbar, bei der sämtliche dachseitigen Komponenten der Verdampfereinheit und der optionalen Kondensatoreinheit an der Haube befestigt sind, wodurch die Haube eine vormontierbare Baugruppe bildet, die am Fahrzeugdach befestigt wird. Im montierten Zustand sind dann die Verdampfereinheit, insbesondere deren Gehäuse, sowie die optionale Kondensatoreinheit, insbesondere deren Lüfterzarge, ausschließlich über die Haube am Fahrzeugdach befestigt. Gehäuse und Lüfterzarge sind dann nicht direkt, sondern nur indirekt über die Haube am Fahrzeugdach befestigt. Ein direkter Kontakt zwischen Gehäuseunterteil und Fahrzeugdach einerseits sowie zwischen Lüfterzarge und Gehäusedach andererseits ist dadurch jedoch nicht ausgeschlossen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine stark vereinfachte Frontansicht eines Fahrzeugs mit einer Aufdachklimaanlage,
- Fig. 2: eine isometrische Ansicht von oben der Aufdachklimaanlage,
- Fig. 3: eine auseinandergezogene, isometrische Ansicht von oben der Aufdachklimaanlage,
- Fig. 4: eine isometrische Ansicht von oben auf einen Rahmen mit Gehäuseunterteil und Lüfterzarge der Aufdachklimaanlage,
- Fig. 5: eine auseinandergezogene, isometrische Ansicht von oben der Aufdachklimaanlage, jedoch bei einer anderen Ausführungsform,
- Fig. 6: eine isometrische Ansicht von oben des Rahmens mit Gehäuseunterteil der Aufdachklimaanlage aus Fig. 5,
- Fig. 7: eine auseinandergezogene, isometrische Ansicht von oben der Aufdachklimaanlage bei einer Variante der in Fig. 5 gezeigten Ausführungsform,
- Fig. 8: eine isometrische Ansicht von oben eines Zusatzrahmens mit Lüfterzarge der Aufdachklimaanlage aus Fig. 7,
- Fig. 9: eine auseinandergezogene, isometrische Ansicht von unten der Aufdachklimaanlage bei einer weiteren Ausführungsform,
- Fig. 10: eine isometrische Ansicht von unten einer Haube der Aufdachklimaanlage aus Fig. 9,
- Fig. 11: eine isometrische Ansicht von unten eines Gehäuseunterteils und einer Lüfterzarge der Aufdachklimaanlage aus Fig. 9,
- Fig. 12: eine auseinandergezogene, isometrische Ansicht von unten der Aufdachklimaanlage bei einer weiteren Ausführungsform,
- Fig. 13: eine isometrische Ansicht von unten der Haube der Aufdachklimaanlage aus Fig. 12.

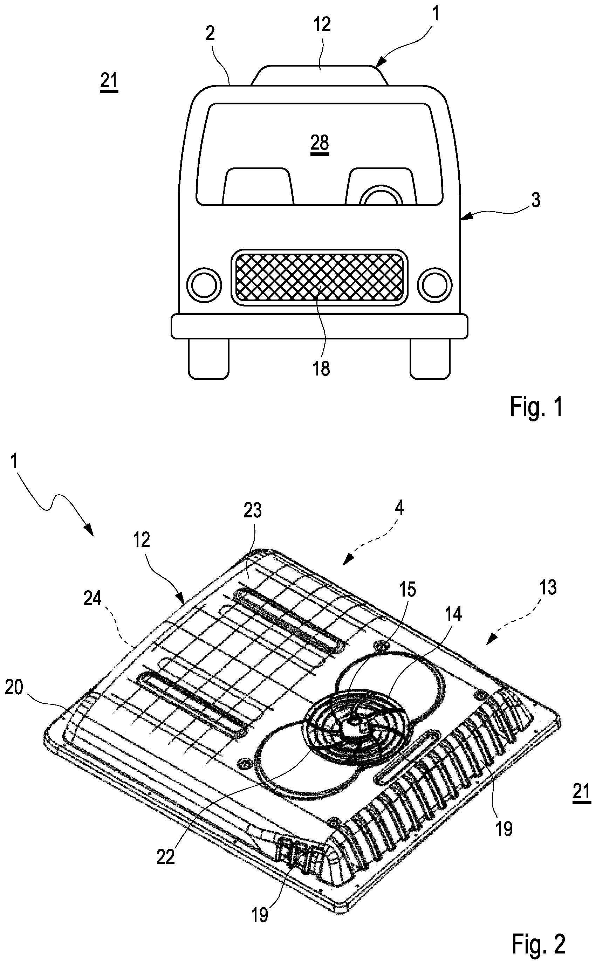

Entsprechend Fig. 1 ist eine Aufdachklimaanlage 1 zur Montage auf einem Fahrzeugdach 2 eines Straßenfahrzeugs 3 vorgesehen. Im Beispiel handelt es sich beim Straßenfahrzeug 3 um einen Omnibus. Denkbar sind jedoch auch andere Großfahrzeuge, wie zum Beispiel Lastkraftwagen, Lieferwagen, Transporter, Vans.

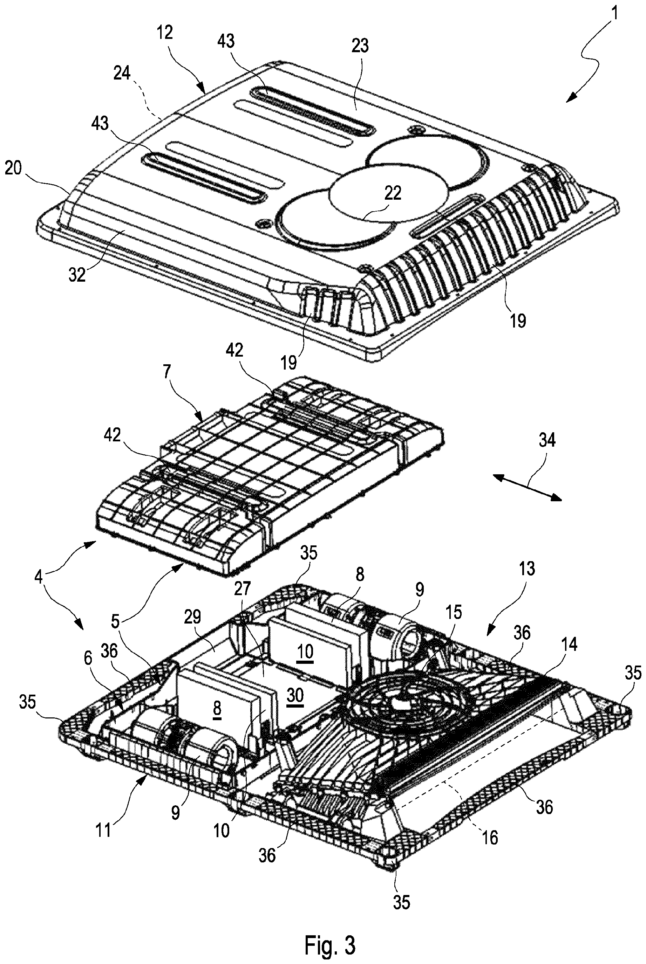

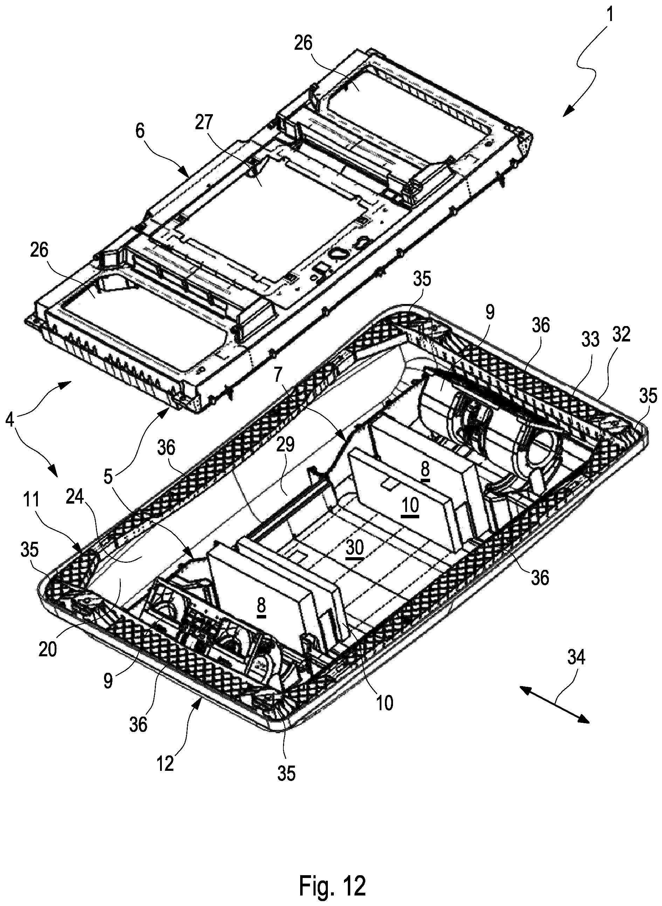

Bei allen hier gezeigten Ausführungsformen weist die Aufdachklimaanlage 1 gemäß den Fig. 3, 5, 7, 9 und 12 eine Verdampfereinheit 4 auf, die ein Gehäuse 5 besitzt, das seinerseits ein Gehäuseunterteil 6 sowie ein Gehäuseoberteil 7 aufweist. Im Gehäuse 5 ist zumindest ein Verdampfer 8 angeordnet. Bei den hier gezeigten Ausführungsformen sind im Gehäuse 5 jeweils zwei Verdampfer 8 angeordnet. Außerdem ist hier jedem Verdampfer 8 ein Verdampfergebläse 9 zugeordnet, das ebenfalls im Gehäuse 5 untergebracht ist. Ferner ist hier jedem Verdampfer 8 ein Luftfilter 10 zugeordnet, das ebenfalls im Gehäuse 5 angeordnet ist.

Die Aufdachklimaanlage 1 weist außerdem einen Rahmen 11 auf, der zum Befestigen der Aufdachklimaanlage 1 am Fahrzeugdach 2 vorgesehen ist. Ferner ist eine Haube 12 vorgesehen, die zum Abdecken der Verdampfereinheit 4 dient und die fest mit dem Rahmen 11 verbunden ist und insbesondere daran befestigt ist.

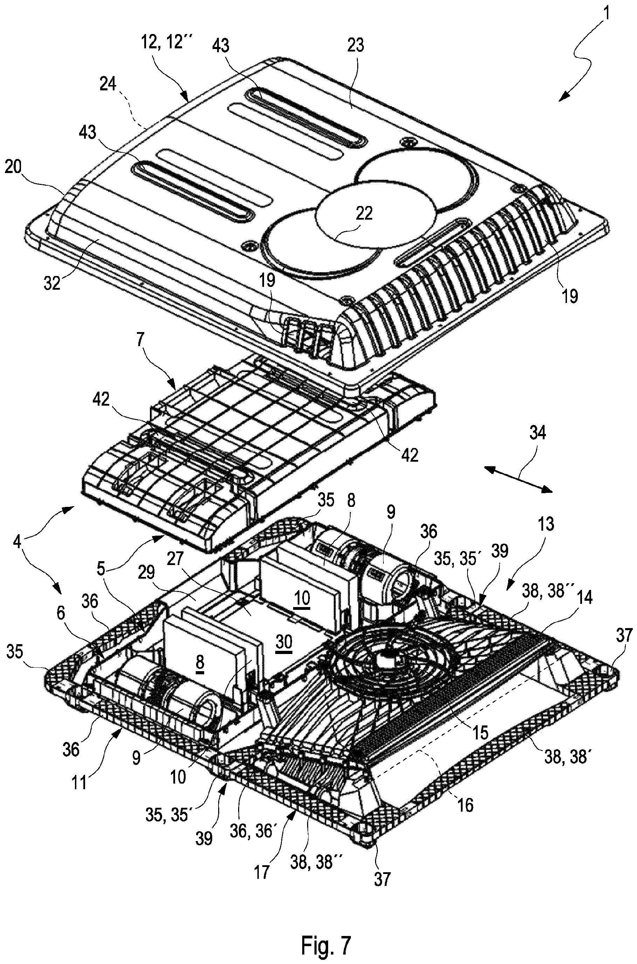

Gemäß den Fig. 3, 7 und 9 kann die Aufdachklimaanlage 1 außerdem mit einer Kondensatoreinheit 13 ausgestattet sein. Diese umfasst eine Lüfterzarge 14, zumindest ein Kondensatorgebläse 15 sowie zumindest einen in den Fig. 3 und 7 mit unterbrochener Linie angedeuteten Kondensator 16. Die Lüfterzarge 14 definiert einen Strömungskanal vom Kondensator 16 zum Kondensatorgebläse 15. Ferner kann die Lüfterzarge 14 auch eine Kanalisierung der Luftströmung innerhalb der Haube 12 zum Kondensator 16 erzeugen. Zweckmäßig sind das Kondensatorgebläse 15 und der Kondensator 16 an der Lüfterzarge 14 befestigt, so dass durch die Fixierung der Lüfterzarge 14 am Rahmen 11 oder an einem Zusatzrahmen 17 oder an der Haube 12 indirekt über die Lüfterzarge 14 auch das Kondensatorgebläse 15 und der Kondensator 16 am Rahmen 11 bzw. am Zusatzrahmen 17 bzw. an der Haube 12 fixiert sind. Der Zusatzrahmen 17 ist bei der in Fig. 7 gezeigten Ausführungsform zusätzlich zum Rahmen 11 vorgesehen und dabei der Kondensatoreinheit 13 zugeordnet.

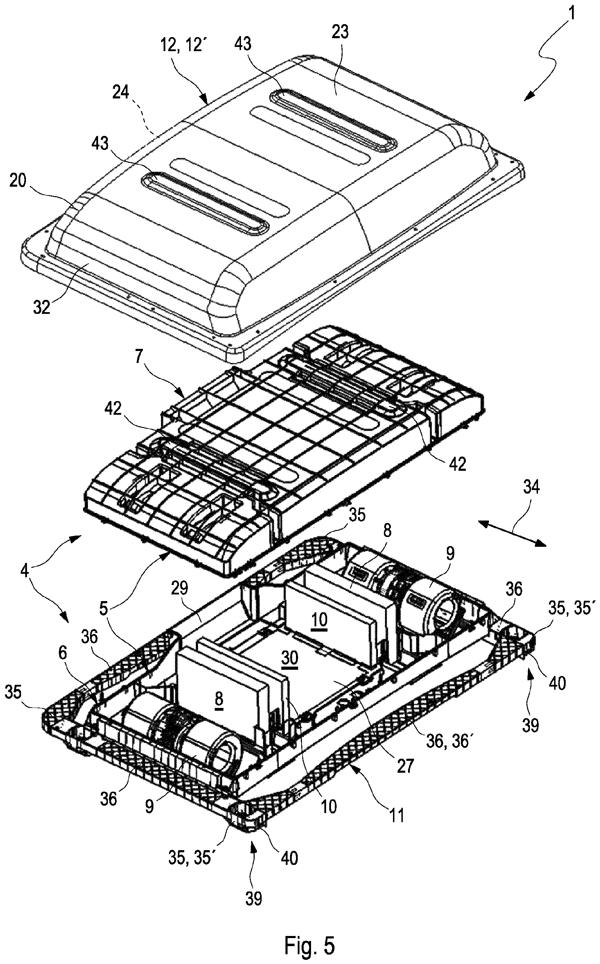

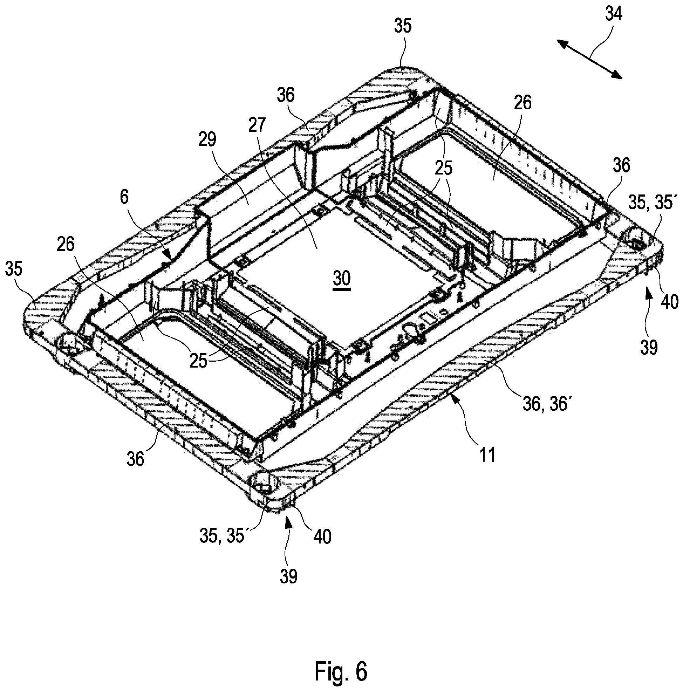

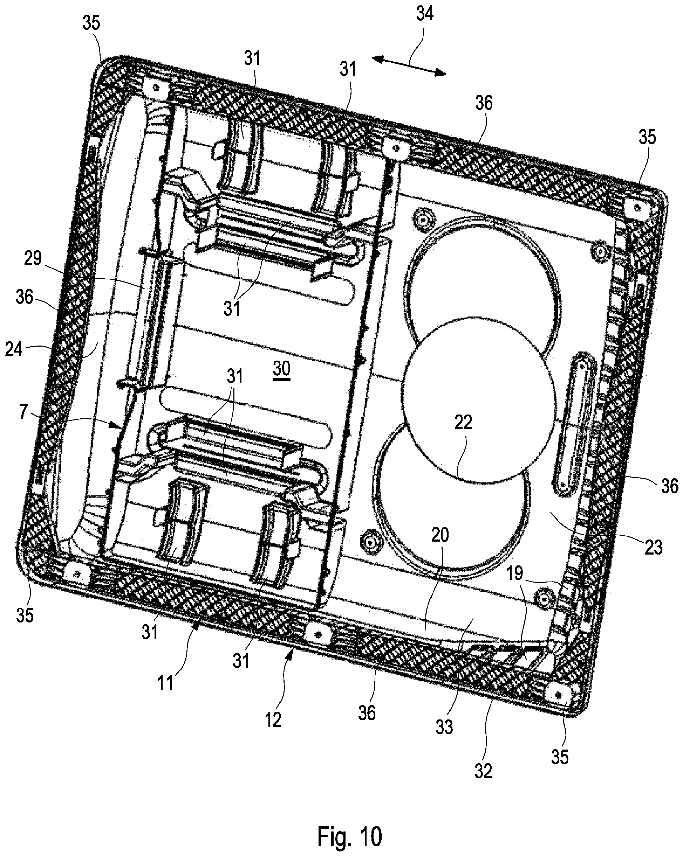

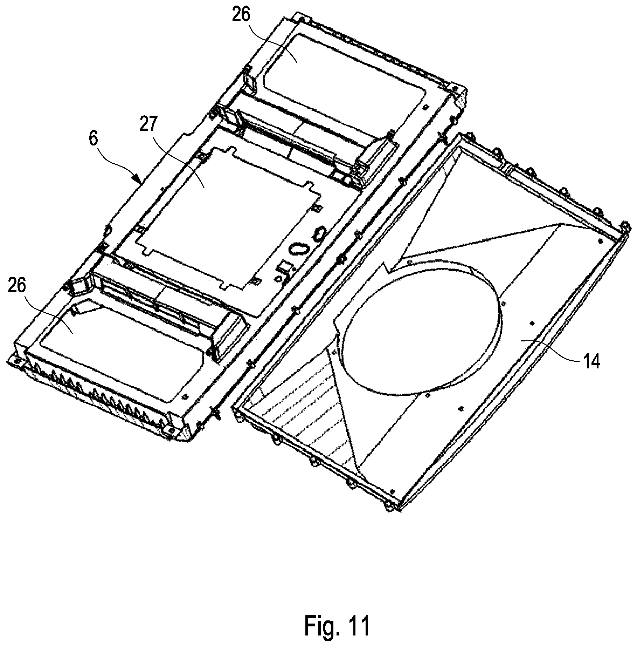

Die nachfolgend zu verschiedenen Varianten bzw. Ausführungsformen der Aufdachklimaanlage 1 beschriebenen Merkmale lassen sich soweit sinnvoll quasi beliebig untereinander kombinieren. Die Fig. 2 bis 4 und 7 bis 11 beziehen sich auf eine große Variante der Aufdachklimaanlage 1, die sowohl eine Verdampfereinheit 4 als auch eine Kondensatoreinheit 13 aufweist. Im Unterschied dazu zeigen die Fig. 5, 6 und 12 eine kleine Variante der Aufdachklimaanlage 1, die nur die Verdampfereinheit 4, also keine Kondensatoreinheit 13 aufweist. Bei dieser kleinen Variante ist ein hier nicht gezeigter Kältekreis, in den der jeweilige Verdampfer 8 eingebunden ist, mit einem anderen Kondensator gekoppelt, der außerhalb der Haube 12 an einer beliebigen anderen Stelle des Fahrzeugs 3 angeordnet sein kann. Beispielsweise kann ein derartiger externer Kondensator hinter einem in Fig. 1 angedeuteten Kühlergitter 18 am bzw. im Fahrzeug 3 angeordnet sein.

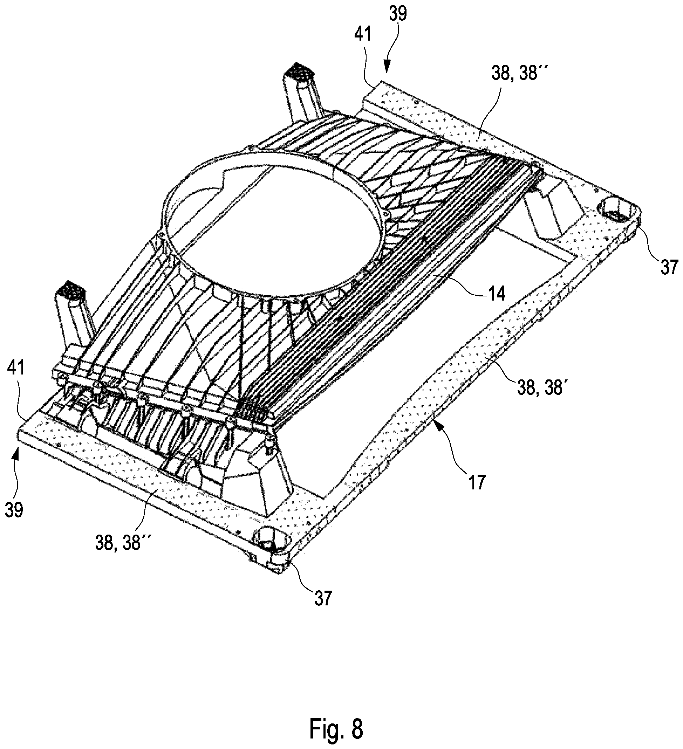

Zweckmäßig sind der Rahmen 11, das Gehäuseunterteil 6, das Gehäuseoberteil 7 und die Lüfterzarge 14 aus einem Kunststoff durch Spritzgießen hergestellt. Zumindest bei der in den Fig. 2 bis 4 gezeigten Ausführungsform ist das Gehäuseunterteil 6 integral am Rahmen 11 ausgeformt. Ferner ist hier die Lüfterzarge 14 integral am Rahmen 11 ausgeformt. Bei der in den Fig. 7 und 8 gezeigten Ausführungsform ist die Lüfterzarge 14 dagegen integral am Zusatzrahmen 17 ausgeformt, der zusätzlich zum Rahmen 11 vorgesehen ist.

Bei allen Ausführungsformen, bei denen die große Variante der Aufdachklimaanlage 1 realisiert ist, weist die Haube 12 seitliche Kondensatorlufteinlassöffnungen 19 auf, was hier durch eine Gitterstruktur im Bereich eines Rands 20 der wannenförmigen Haube 12 realisiert ist. Durch diese Kondensatorlufteinlassöffnungen 19 kann im Betrieb der Kondensatoreinheit 13 aus einer Umgebung 21 des Fahrzeugs 3 angesaugt werden. Diese Frischluft tritt in die Haube 12 ein und wird darin von der Lüfterzarge 14 zum Kondensator 16 geführt. Die Frischluft durchströmt den Kondensator 16 und nimmt dabei Wärme auf. Die Lüfterzarge 14 führt die nunmehr aufgewärmte Frischluft dem Kondensatorgebläse 15 zu, das die aufgewärmte Frischluft durch eine Kondensatorluftauslassöffnung 22 aus der Haube 12 herausfördert und wieder der Umgebung 21 zuführt. Diese Kondensatorluftauslassöffnung 22 ist oben auf der Haube 12 angeordnet, also an einem Boden 23 der wannenförmigen Haube 12 ausgebildet.

Die Kondensatorluftauslassöffnung 22 ist hier als im Wesentlichen kreisförmige Öffnung ausgestaltet. Anstelle einer einzigen, zentral bzw. mittig angeordneten Kondensatorluftauslassöffnung 22 können bei einer anderen, leistungsstärkeren Ausführungsform auch zwei Kondensatorluftauslassöffnungen 22 nebeneinander an der Haube 12 angeordnet sein. In den gezeigten Beispielen ist die Haube 12 bereits für zwei solche, nebeneinanderliegende Kondensatorluftauslassöffnungen 22 vorbereitet. Die entsprechenden Umlaufkonturen überschneiden sich mit der realisierten mittigen Kondensatorluftauslassöffnung 22. Für die leistungsstärkere Ausführungsform werden dann zur Realisierung der beiden nebeneinander liegenden Kondensatorluftauslassöffnungen 22 diese beiden Umlaufkonturen anstelle der mittigen Kondensatorluftauslassöffnung 22 freigeschnitten oder freigestanzt. Es ist klar, dass bei dieser leistungsstärkeren Ausführungsform dann demensprechend auch zwei Kondensatorgebläse 15 an der entsprechend angepassten Lüfterzarge 14 vorgesehen sind.

Die Haube 12 weist außerdem zumindest eine haubenseitige Verdampferlufteinlassöffnung 24 auf, die sich ebenfalls seitlich am Rand 20 der Haube 12 befinden kann. Alternativ kann eine solche haubenseitige Verdampferlufteinlassöffnung 24 durch einen Spalt gebildet sein, der bei montierter Aufdachklimaanlage 1 zwischen dem Rand 20 der Haube 12 und dem Fahrzeugdach 2 ausgebildet ist.

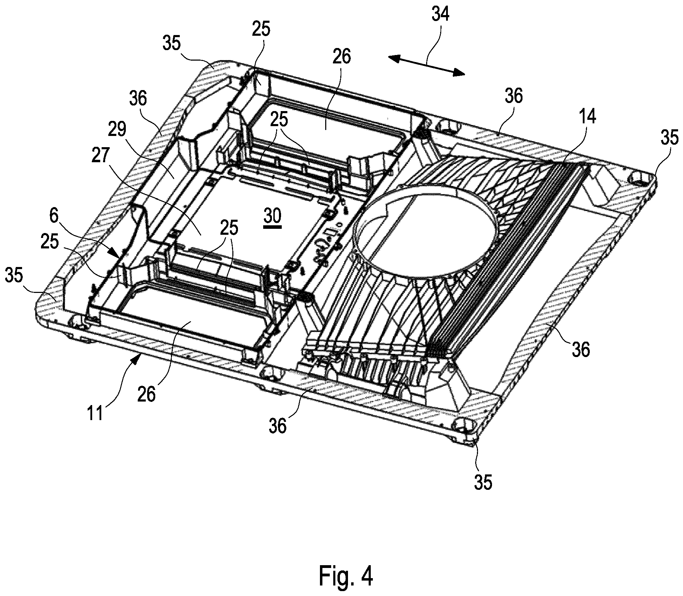

Das Gehäuseunterteil 6 weist insbesondere gemäß Fig. 4 mehrere Montagestellen 25 auf, die zum Anbauen der Verdampfer 8, der Verdampfergebläse 9 und der Luftfilter 10 dienen und die zumindest teilweise integral am Gehäuseunterteil 6 ausgeformt sind. Das Gehäuseunterteil 6 weist außerdem für jedes Verdampfergebläse 9 eine Verdampferluftauslassöffnung 26 auf, durch die das Verdampfergebläse 9 im Betrieb der Verdampfereinheit 4 gekühlte Luft einem fahrzeugseitigen Kühlluftkanalsystem zugeführt werden kann, das dann die gekühlte Luft auf geeignete Weise einem in Fig. 1 erkennbaren Fahrzeuginnenraum 28 zuführt. Ferner weist das Gehäuseunterteil 6 hier eine gehäuseseitige Verdampferlufteinlassöffnung 27 auf, durch die Luft aus dem Fahrzeuginnenraum 28 angesaugt werden kann. Wie sich insbesondere den Fig. 3 bis 7, 9, 10 und 12 entnehmen lässt, besitzt das Gehäuse 5 einen Lufteinlass 29, der mit einem Einlassraum 30 fluidisch verbunden ist, der sich im Gehäuse 5 befindet. Durch diesen Lufteinlass 29 gelangt Umgebungsluft, die durch die haubenseitige Verdampferlufteinlassöffnung 24 in die Haube 12 eindringen kann, in den Einlassraum 30. Zweckmäßig ist dieser Lufteinlass 29 mit Hilfe hier nicht gezeigter Steuermittel steuerbar, so dass der durchströmbare Querschnitt dieses Lufteinlasses 29 mehr oder weniger variiert werden kann.

Gemäß den Fig. 3, 5, 7, 9 und 12 sind die beiden Verdampfer 8 im Gehäuse 5 so angeordnet, dass sie sich am Einlassraum 30 gegenüberliegen. Die beiden Verdampfergebläse 9 sind dabei jeweils an einer vom Einlassraum 30 abgewandten Seite des zugehörigen Verdampfers 8 angeordnet. Die beiden Luftfilter 10 sind jeweils zwischen dem Einlassraum 30 und dem zugehörigen Verdampfer 8 angeordnet. Durch die gehäuseseitige Verdampferlufteinlassöffnung 27 kann aus dem Fahrzeuginnenraum 28 Umluft angesaugt werden, die durch die Luftfilter 10 gefiltert, durch die Verdampfer 8 gekühlt und durch die Verdampfergebläse 9 letztlich dem Innenraum 28 rückgeführt werden kann. Durch die haubenseitige Verdampferlufteinlassöffnung 24 kann Frischluft aus der Umgebung 21 angesaugt und durch den Lufteinlass 29 ebenfalls dem Einlassraum 30 zugeführt werden, von wo aus sie ebenfalls durch die Luftfilter 10, die Verdampfer 8 und die Verdampfergebläse 9 gefiltert und gekühlt dem Fahrzeuginnenraum 28 zugeführt werden kann. Durch Steuern des Lufteinlasses 29 kann dabei der Frischluftanteil variiert werden.

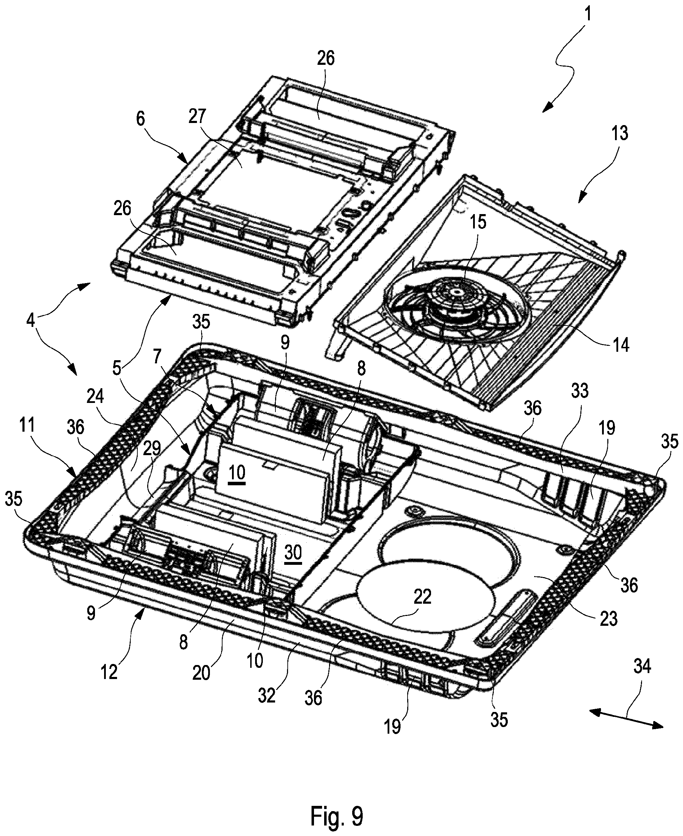

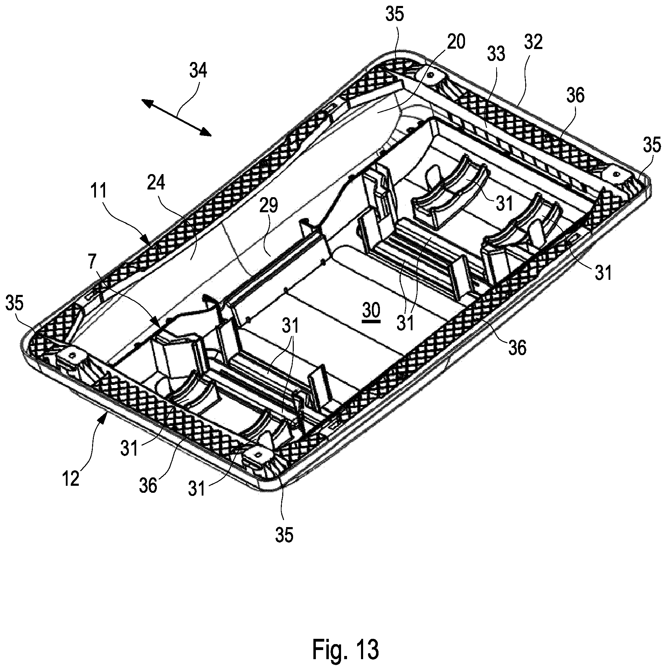

Das Gehäuseoberteil 7 kann insbesondere gemäß den Fig. 9, 10, 12 und 13 ebenfalls Montagestellen 31 zum Anbauen der Verdampfer 8, der Verdampfergebläse 9 und der Luftfilter 10 aufweisen, die zumindest teilweise integral am Gehäuseoberteil 7 ausgeformt sind. Eine solche Montagestelle 31 kann nicht gezeigte Befestigungsmittel zum Befestigen der jeweiligen Komponente, hier der beiden Verdampfer 8, der beiden Verdampfergebläse 9 und der beiden Luftfilter 10, am Gehäuseoberteil 7 und/oder nicht gezeigte Positioniermittel zum Positionieren der jeweiligen Komponente 8, 9, 10 am Gehäuseoberteil 7 aufweisen. Derartige Befestigungsmittel ermöglichen eine mechanisch feste Verbindung der jeweiligen Komponente 8, 9, 10 am Gehäuseoberteil 7 bzw. an der Haube 12 und beinhalten beispielsweise Bestandteile von Schraubverbindungen, Clipverbindungen und Rastverbindungen. Derartige Positioniermittel ermöglichen eine Lagefixierung der jeweiligen Komponente 8, 9, 10 am Gehäuseoberteil 7 bzw. an der Haube 12 und sind beispielsweise durch Anschläge, Rahmenteile, Einstecköffnungen und Einsteckvertiefungen gebildet.

Grundsätzlich kann die Haube 12 als Thermoformteil ausgestaltet sein. Bevorzugt ist jedoch eine Ausführungsform, bei welcher die Haube 12 eine Außenhaut 32 aus einem ersten Kunststoff und eine Innenhaut 33 aus einem zweiten Kunststoff aufweist, der vom ersten Kunststoff verschieden ist. Insbesondere kann die Haube 12 als folienhinterspritztes Kompositbauteil konzipiert sein, was weiter unten näher erläutert wird.

Bei den Ausführungsformen der Fig. 2 bis 8 ist der Rahmen 11 bezüglich der Haube 12 ein separates Bauteil. Ebenso ist der in den Fig. 7 und 8 gezeigte Zusatzrahmen 17 bezüglich der Haube 12 ein separates Bauteil. Bei den Ausführungsformen der Fig. 9 bis 12 ist dagegen der Rahmen 11 in die Haube 12 integriert, so dass er auch als Haubenrahmen 11 bezeichnet werden kann, was weiter unten noch näher erläutert wird. Bei den Ausführungsformen der Fig. 2 bis 4 sowie 9 und 10 ist der Rahmen 11 so konzipiert, dass er die Verdampfereinheit 4 und die in Fahrzeuglängsrichtung 34 daran anschließende Kondensatoreinheit 13 seitlich und an allen vier Seiten geschlossen umlaufend einfasst. Insbesondere ist der Rahmen 11 dabei rechteckig konzipiert, so dass er vier Eckbereiche 35 besitzt, die über vier geradlinige Seitenabschnitte 36 miteinander verbunden sind.

Bei der in den Fig. 5 bis 8 gezeigten Ausführungsform ist der Rahmen 11 ebenfalls rechteckig konzipiert, weist vier Eckbereiche 35 und vier geradlinige Seitenabschnitte 36 auf, durch die die Eckebereiche 35 miteinander verbunden sind. Allerdings schließt der Rahmen 11 hier nur die Verdampfereinheit 4 seitlich und an allen vier Seiten geschlossen umlaufend ein. Ferner ist der Rahmen 11 an zwei Eckbereichen 35, die in den Fig. 5 bis 7 außerdem mit 35' bezeichnet sind, zum Anbau des Zusatzrahmens 17 vorbereitet. Der Zusatzrahmen 17 ist im hier gezeigten Beispiel im Wesentlichen U-förmig konzipiert und besitzt zwei Eckbereiche 37 sowie drei geradlinige Seitenabschnitte 38. Einer dieser Längsabschnitte 38, der im Folgenden auch mit 38' bezeichnet wird und der quasi die Basis der U-Form bildet, verbindet die beiden Eckbereiche 37 miteinander. Die beiden anderen Seitenabschnitte 38, die im Folgenden auch mit 38" bezeichnet werden und die quasi die Schenkel der U-Form bilden, sind jeweils an ihrem vom jeweiligen Eckbereich 37 entfernten Ende zum Anbau an den Rahmen 11 vorbereitet. Beispielsweise kann zum Anbauen des Zusatzrahmens 17 am Rahmen 11 an jedem Eckbereich 35' eine Befestigungsvorrichtung 39 zum Einsatz kommen, die zumindest zweiteilig konzipiert ist und einen am Rahmen 11 ausgebildeten ersten Bestandteil 40 sowie einen am Zusatzrahmen 17 ausgebildeten zweiten Bestandteil 41 aufweist, der komplementär zum ersten Bestandteil 40 ausgestaltet ist und mit diesem zum Fixieren des Zusatzrahmens 17 am Rahmen 11 zusammenwirken kann. Beispielsweise sind der erste Bestandteil 40 und der zweite Bestandteil 41 als zueinander komplementäre Stecker und Gegenstecker bzw. als zueinander komplementäre Schraubstelle und Gegenschraubstelle bzw. als zueinander komplementäre Raststelle und Gegenraststelle bzw. als Bügel und Bügeleingriff ausgestaltet.

Wenn der vorzugsweise U-förmige Zusatzrahmen 17 gemäß Fig. 7 an den vorzugsweise rechteckigen Rahmen 11 angebaut ist, erstreckt sich einer der Seitenabschnitte 36 des Rahmens 11 zwischen der Verdampfereinheit 4 und der Kondensatoreinheit 13. Dieser Seitenabschnitt 36 wird im Folgenden auch mit 36' bezeichnet. Dieser Seitenabschnitt 36' verschließt die offene Seite des U-förmigen Zusatzrahmens 17 und stabilisiert diesen.

Die in den Fig. 5 bis 8 gezeigte Ausführungsform veranschaulicht außerdem ein Baukastensystem, mit dessen Hilfe einerseits die in Fig. 5 gezeigte kleine Variante der Aufdachklimaanlage 1 und andererseits die in Fig. 7 gezeigte große Variante der Aufdachklimaanlage 1 realisierbar ist. Dieses Baukastensystem umfasst die Verdampfereinheit 4, den Rahmen 11, die Kondensatoreinheit 13, den Zusatzrahmen 17, eine kleine Haube 12 bzw. 12' und eine große Haube 12 bzw. 12". Um die in Fig. 5 gezeigte kleine Variante realisieren zu können, kommen die Verdampfereinheit 4 mit dem Rahmen 11 und der kleinen Haube 12' zum Einsatz. Zum Realisieren der großen Variante gemäß Fig. 7 kommen die Verdampfereinheit 4, der Rahmen 11, die Kondensatoreinheit 13 und der Zusatzrahmen 17 in Verbindung mit der großen Haube 12" zum Einsatz.

Insbesondere im Hinblick auf die Fig. 9 bis 13 wird nunmehr eine weitere Ausführungsform näher erläutert, die weitgehend mit den vorstehend beschriebenen Ausführungsformen kombinierbar ist. Bei der in den Fig. 9 bis 13 gezeigten Ausführungsform ist die Haube 12 so hergestellt, dass sie eine Außenhaut 32 aus einem witterungsbeständigen ersten Kunststoff besitzt, die sich an einer Außenseite der Haube 12 befindet. Ferner besitzt die Haube 12 eine Innenhaut 33, die sich an einer Innenseite der Haube 12 befindet und aus einem zweiten Kunststoff besteht, der vom ersten Kunststoff der Außenhaut 32 verschieden ist. Erfindungsgemäß ist die Innenhaut 33 an die Außenhaut 32 angespritzt. Da witterungsbeständige Kunststoffe nicht ohne weiteres spritzformbar sind, wird zur Realisierung der Außenhaut 32 die Verwendung einer Kunststofffolie bevorzugt, die mit dem spritzfähigen zweiten Kunststoff hinterspritzt wird, um die Innenhaut 33 zu erzeugen. Hierdurch kann die Haube 12 mit Hilfe der Außenhaut 32 witterungsbeständig, also insbesondere alterungsbeständig und UV-beständig, realisiert werden. Ebenso lässt sich die Außenhaut 32 besonders einfach mit jeder beliebigen Farbgebung versehen. Die Innenhaut 33 ist spritzgeformt und kann dementsprechend nahezu beliebig komplexe Konturen und Geometrien aufweisen. Insbesondere ist es dadurch möglich, weitere Komponenten oder Bestandteile der Aufdachklimaanlage 1 in die Haube 12 zu integrieren.

Zweckmäßig kann nämlich das Gehäuseoberteil 7 der Verdampfereinheit 4 an dieser Innenhaut 33 integral ausgeformt werden. Das heißt, beim Spritzgießen der Innenhaut 33 wird gleichzeitig das Gehäuseoberteil 7 ausgeformt. Wie bereits erwähnt, kann das Gehäuseoberteil 7 Montagestellen 31 aufweisen, die nunmehr ebenfalls zumindest teilweise integral an der Innenhaut 33 ausgeformt sein können.

Wie bereits erwähnt, kann der Rahmen 11 integral an der Innenhaut 33 ausgeformt sein. In diesem Fall kann der in die Haube 12 integrierte Rahmen 11 auch als Haubenrahmen 11 bezeichnet werden. Hierdurch ergibt sich gleichzeitig eine intensive Aussteifung der Haube 12. Erkennbar bildet der Rahmen 11 eine seitliche Einfassung des Haubenrands 20 an einer dem Fahrzeugdach 2 zugewandten Seite bzw. an einer vom Boden 23 der wannenförmigen Haube 12 abgewandten Seite. Der Rahmen 11 bildet dabei eine seitliche Einfassung des Gehäuseunterteils 6.

Obwohl in den Fig. 9 bis 11 die Lüfterzarge 14 als separates Bauteil gezeigt ist, kann bei einer anderen Ausführungsform vorgesehen sein, die Lüfterzarge 14 ebenfalls an der Innenhaut 33 integral auszuformen. Dadurch kann beim Spritzen der Innenhaut 33 gleichzeitig auch die Lüfterzarge 14 hergestellt werden.

Bei der in den Fig. 9 bis 13 gezeigten Ausführungsform ist insbesondere vorgesehen, dass das Gehäuseunterteil 6 unmittelbar am Gehäuseoberteil 7, also an der Innenhaut 33 der Haube 12 befestigt werden kann. Hierzu können geeignete Befestigungsmittel, wie Rastverbindungen und Schraubverbindungen und dergleichen vorgesehen sein. Ferner kann die Haube 12 mit der Verdampfereinheit 4 eine Montagegruppe bilden, die komplett vormontierbar ist und im vormontierten Zustand auf dem Fahrzeugdach 2 frei montiert werden. Hierzu kann der Rahmen 11 unmittelbar am Fahrzeugdach 2 festgelegt werden. Außerdem kann dadurch erreicht werden, dass das Gehäuseunterteil 6 nicht direkt am Fahrzeugdach 2, sondern nur mittelbar, nämlich über die Haube 12 am Fahrzeugdach 2 festgelegt ist.

Sofern wie in den Fig. 9 bis 11 auch die Kondensatoreinheit 13 vorgesehen ist, kann die Lüfterzarge 14 entweder in die Haube 12 integriert sein oder wie hier als separates Bauteil vorgesehen sein und fest mit der Haube 12 verbunden werden. Beispielsweise können hier Schraubverbindungen vorgesehen sein.

Sofern das Gehäuseoberteil 7 bezüglich der Haube 12 ein separates Bauteil ist, was bei den in den Fig. 2 bis 8 gezeigten Ausführungsformen der Fall ist, kann das Gehäuseoberteil 7 Positionierkonturen 42 aufweisen, die hier als längliche, nach oben, in Richtung Haube 12 abstehende Vorsprünge ausgebildet sind. Die Haube 12 kann nun an ihrer dem Gehäuse 5 zugewandten Innenseite zu den Positionierkonturen 42 komplementäre Gegenpositionierkonturen 43 aufweisen, die beispielsweise durch geradlinige Vertiefungen realisiert sein können, in die die vorstehend genannten Vorsprünge formschlüssig eingreifen können.

## Patentansprüche

1. Haube einer Aufdachklimaanlage (1),
- mit einer Außenhaut (32) aus einem ersten Kunststoff, die sich an einer Außenseite der Haube (12) befindet,
- mit einer Innenhaut (33), die sich an einer Innenseite der Haube (12) befindet, und die aus einem zweiten Kunststoff besteht, der vom ersten Kunststoff der Außenhaut (32) verschieden ist,
**dadurch gekennzeichnet dass** die Innenhaut (33) an die Außenhaut (32) angespritzt ist.

2. Haube nach Anspruch 1,
**dadurch gekennzeichnet,**
**dass** die Haube (12) mittels Folienhinterspritztechnik hergestellt ist.

3. Haube nach Anspruch 1 oder 2,
**dadurch gekennzeichnet,**
**dass** an der Innenhaut (33) ein Gehäuseoberteil (7) einer Verdampfereinheit (4) der Aufdachklimaanlage (1) integral ausgeformt ist, das im montierten Zustand der Haube (12) ein Gehäuseunterteil (6) der Verdampfereinheit (4) verschließt.

4. Haube nach Anspruch 3,
**dadurch gekennzeichnet,**
**dass** am Gehäuseoberteil (7) wenigstens eine Montagestelle (31) zum Anbauen wenigstens einer Komponente der Verdampfereinheit (4), wie zum Beispiel eines Verdampfers (8) und/oder eines Verdampfergebläses (9) und/oder eines Luftfilters (10), integral ausgeformt ist.

5. Haube nach Anspruch 4,
**dadurch gekennzeichnet,**
**dass** die jeweilige Montagestelle (31) Befestigungsmittel zum Befestigen der jeweiligen Komponente am Gehäuseoberteil (7) und/oder Positioniermittel zum Positionieren der jeweiligen Komponente am Gehäuseoberteil (7) aufweist.

6. Haube nach einem der Ansprüche 1 bis 5,
**dadurch gekennzeichnet,**
**dass** an der Innenhaut (33) ein Rahmen (11) integral ausgeformt ist, der eine offene Seite der Haube (12), die im montierten Zustand der Haube (12) einem Fahrzeugdach (2) zugewandt ist, entlang eines Haubenrands (20) seitlich einfasst.

7. Haube nach den Ansprüchen 3 und 6,
**dadurch gekennzeichnet,**
**dass** der Rahmen (11) das Gehäuseoberteil (7) seitlich einfasst.

8. Haube nach Anspruch 6 oder 7,
**dadurch gekennzeichnet,**
**dass** der Rahmen (11) im montierten Zustand entweder an einem Dachrahmen, der am Fahrzeugdach (2) befestigt ist, oder direkt am Fahrzeugdach (2) befestigt ist.

9. Haube nach einem der Ansprüche 1 bis 8,
**dadurch gekennzeichnet,**
**dass** an der Innenhaut (33) eine Lüfterzarge (14) einer Kondensatoreinheit (13) der Aufdachklimaanlage (1) integral ausgeformt ist, die im montierten Zustand der Haube (12) von einem Kondensator (16) der Kondensatoreinheit (13) zu einem Kondensatorgebläse (15) der Kondensatoreinheit (13) führt.

10. Haube nach den Ansprüchen 6 und 9,
**dadurch gekennzeichnet,**
**dass** der Rahmen (11) die Lüfterzarge (14) seitlich einfasst.

11. Haube nach den Ansprüchen 7 und10,
**dadurch gekennzeichnet,**
**dass** der Rahmen (11) das Gehäuseoberteil (7) und die Lüfterzarge (14) seitlich einfasst.

12. Aufdachklimaanlage für ein Straßenfahrzeug (3),
- mit einer Verdampfereinheit (4), die in einem Gehäuse (5), das ein Gehäuseunterteil (6) und ein Gehäuseoberteil (7) aufweist, zumindest einen Verdampfer (8) aufweist,
- wobei die Verdampfereinheit (4) mit einer Haube (12) nach einem der Ansprüche 1 bis 11 abgedeckt ist.

13. Aufdachklimaanlage nach Anspruch 12,
**dadurch gekennzeichnet,**
- **dass** ein Dachrahmen vorgesehen ist, der im montierten Zustand der Aufdachklimaanlage (1) am Fahrzeugdach (2) befestigt ist,
- **dass** der Rahmen (11) am Dachrahmen befestigt ist.

14. Aufdachklimaanlage nach Anspruch 12 oder 13,
**dadurch gekennzeichnet,**
**dass** das Gehäuseoberteil (7) an der Innenhaut (33) befestigt ist oder daran integral ausgeformt ist, wobei das Gehäuseunterteil (6) am Gehäuseoberteil (7) befestigt ist, derart, dass das Gehäuseunterteil (6) im montierten Zustand der Aufdachklimaanlage (1) nur über die Haube (12) am Fahrzeugdach (2) befestigt ist.

15. Aufdachklimaanlage nach einem der Ansprüche 12 bis 14,
**dadurch gekennzeichnet,**
**dass** die Lüfterzarge (14) an der Innenhaut (33) befestigt ist oder daran integral ausgeformt ist, derart, dass im montierten Zustand der Aufdachklimaanlage (1) die Lüfterzarge (14) nur über die Haube (12) am Fahrzeugdach (2) befestigt ist.

## Claims

1. Cover of a rooftop air conditioning system (1),
- having an outer skin (32) made from a first plastic which is located on an outside of the cover (12),
- having an inner skin (33) which is located on an inner side of the cover (12) and which consists of a second plastic which is different to the first plastic of the outer skin (32),
**characterised in that** the inner skin (33) is sprayed onto the outer skin (32).

2. Cover according to claim 1,
**characterised in that**
the cover (12) is produced by means of a foil back-injection moulding technique.

3. Cover according to claim 1 or 2,
**characterised in that**
a housing upper part (7) of an evaporator unit (4) of the rooftop air conditioning system (1) is formed integrally on the inner skin (33), said housing upper part covering a housing lower part (6) of the evaporator unit (4) in the assembled state of the cover (12).

4. Cover according to claim 3,
**characterised in that**
at least one assembly position (31) to attach at least one component of the evaporator unit (4), such as, for example, an evaporator (8) and/or an evaporator fan (9) and/or an air filter (10), is formed integrally on the housing upper part (7).

5. Cover according to claim 4,
**characterised in that**
the respective assembly position (31) has fastening means to fasten the respective component to the housing upper part (7) and/or positioning means to position the respective component on the housing upper part (7).

6. Cover according to any one of claims 1 to 5,
**characterised in that**
a frame (11) is formed integrally on the inner skin (33), said frame bordering, laterally along a cover edge (20), an open side of the cover (12) which is facing towards a vehicle roof (2) in the assembled state of the cover (12).

7. Cover according to claims 3 and 6,
**characterised in that**
the frame (11) borders the housing upper part (7) laterally.

8. Cover according to claim 6 or 7,
**characterised in that**
the frame (11) is fastened either to a roof frame which is fastened to the vehicle roof (2) or directly to the vehicle roof (2) in the assembled state.

9. Cover according to any one of claims 1 to 8,
**characterised in that**
a fan shroud (14) of a condenser unit (13) of the rooftop air conditioning system (1) is formed integrally on the inner skin (33), said fan shroud leading from a condenser (16) of the condenser unit (13) to a condenser fan (15) of the condenser unit (13) in the mounted state of the cover (12).

10. Cover according to claims 6 and 9,
**characterised in that**
the frame (11) borders the fan shroud (14) laterally.

11. Cover according to claims 7 and 10,
**characterised in that**
the frame (11) borders the housing upper part (7) and the fan shroud (14) laterally.

12. Rooftop air conditioning system for a road vehicle (3),
- having an evaporator unit (4) which has at least one evaporator (8) in a housing (5) which has a housing lower part (6) and a housing upper part (7),
- wherein the evaporator unit (4) is covered with a cover (12) according to any one of claims 1 to 11.

13. Rooftop air conditioning system according to claim 12,
**characterised in that**
- a roof frame is provided which is fastened to the vehicle roof (2) in the assembled state of the rooftop air conditioning system (1),
- the frame (11) is fastened to the roof frame.

14. Rooftop air conditioning system according to claim 12 or 13,
**characterised in that**
the housing upper part (7) is fastened to the inner skin (33) or is formed integrally thereon, wherein the housing lower part (6) is fastened to the housing upper part (7) in such a way that the housing lower part (6) is fastened to the vehicle roof (2) only via the cover (12) in the assembled state of the rooftop air conditioning system (1).

15. Rooftop air conditioning system according to any one of claims 12 to 14,
**characterised in that**
the fan shroud (14) is fastened to the inner skin (33) or is formed integrally thereon in such a way that the fan shroud (14) is fastened to the vehicle roof (2) only via the cover (12) in the assembled state of the rooftop air conditioning system (1).

## Revendications

1. Capot d'un climatiseur de toit (1),
- muni d'une enveloppe extérieure (32) constituée d'une première matière plastique et qui se trouve au niveau d'un côté extérieur du capot (12),
- muni d'une enveloppe intérieure (33) qui se trouve au niveau d'un côté intérieur du capot (12) et qui est constituée d'une seconde matière plastique qui est différente de la première matière plastique de l'enveloppe extérieure (32),
**caractérisé en ce que** l'enveloppe intérieure (33) est moulée par injection au niveau de l'enveloppe extérieure (32).

2. Capot selon la revendication 1,
**caractérisé en ce que**
le capot (12) est fabriqué au moyen d'un procédé de moulage par injection arrière de film.

3. Capot selon la revendication 1 ou 2,
**caractérisé en ce que**
une partie supérieure de boîtier (7) d'une unité d'évaporation (4) du climatiseur de toit (1), qui, à l'état monté du capot (12), ferme une partie inférieure de boîtier (6) de l'unité d'évaporation (4), est formée d'un seul tenant au niveau de l'enveloppe intérieure (33).

4. Capot selon la revendication 3,
**caractérisé en ce que**
au moins un emplacement de montage (31) permettant la mise en place d'au moins un composant de l'unité d'évaporation (4), par exemple un évaporateur (8) et/ou une soufflante d'évaporateur (9) et/ou un filtre à air (10), est formé d'un seul tenant au niveau de la partie supérieure de boîtier (7).

5. Capot selon la revendication 4,
**caractérisé en ce que**
l'emplacement de montage (31) respectif présente un moyen de fixation permettant la fixation du composant respectif au niveau de la partie supérieure de boîtier (7) et/ou un moyen de positionnement permettant le positionnement du composant respectif au niveau de la partie supérieure de boîtier (7).

6. Capot selon l'une quelconque des revendications 1 à 5,
**caractérisé en ce que**
un cadre (11) est formé d'un seul tenant au niveau de l'enveloppe intérieure (33), lequel cadre entoure latéralement, le long d'un bord de capot (20), un côté ouvert du capot (12) qui est tourné, à l'état monté du capot (12), vers un toit de véhicule (2).

7. Capot selon les revendications 3 et 6,
**caractérisé en ce que**
le cadre (11) entoure latéralement la partie supérieure de boîtier (7).

8. Capot selon la revendication 6 ou 7,
**caractérisé en ce que**
à l'état monté, le cadre (11) est fixé soit à un cadre de toit qui est fixé au toit de véhicule (2), soit directement au toit de véhicule (2).

9. Capot selon l'une quelconque des revendications 1 à 8,
**caractérisé en ce que**
un châssis de ventilateur (14) d'une unité de condensation (13) du climatiseur de toit (1) est formé d'un seul tenant au niveau de l'enveloppe intérieure (33), lequel châssis de ventilateur, à l'état monté du capot (12), mène d'un condenseur (16) de l'unité de condensation (13) à une soufflante de condenseur (15) de l'unité de condensation (13).

10. Capot selon les revendications 6 et 9,
**caractérisé en ce que**
le cadre (11) entoure latéralement le châssis de ventilateur (14).

11. Capot selon les revendications 7 et 10,
**caractérisé en ce que**
le cadre (11) entoure latéralement la partie supérieure de boîtier (7) et le châssis de ventilateur (14).

12. Climatiseur de toit pour un véhicule routier (3),
- muni d'une unité d'évaporation (4) qui présente au moins un évaporateur (8) dans un boîtier (5) qui présente une partie inférieure de boîtier (6) et une partie supérieure de boîtier (7),
- dans lequel l'unité d'évaporation (4) est recouverte d'un capot (12) selon l'une quelconque des revendications 1 à 11.

13. Climatiseur de toit selon la revendication 12,
**caractérisé en ce que**
- un cadre de toit, fixé au niveau du toit de véhicule (2) à l'état monté du climatiseur de toit (1), est prévu,
- le cadre (11) est fixé au cadre de toit.

14. Climatiseur de toit selon la revendication 12 ou 13,
**caractérisé en ce que**
la partie supérieure de boîtier (7) est fixée au niveau de l'enveloppe intérieure (33) ou est formée d'un seul tenant au niveau de celle-ci, dans lequel la partie inférieure de boîtier (6) est fixée au niveau de la partie supérieure de boîtier (7) de telle manière que la partie inférieure de boîtier (6), à l'état monté du climatiseur de toit (1), n'est fixée au toit de véhicule (2) que par l'intermédiaire du capot (12).

15. Climatiseur de toit selon l'une quelconque des revendications 12 à 14,
**caractérisé en ce que**
le châssis de ventilateur (14) est fixé au niveau de l'enveloppe intérieure (33) ou est formé d'un seul tenant au niveau de celle-ci de telle manière que, à l'état monté du climatiseur de toit (1), le châssis de ventilateur (14) n'est fixé au toit de véhicule (2) que par l'intermédiaire du capot (12).
